(19) Europäisches Patentamt
European Patent Office
Office européen des brevets

(11) **EP 1 882 933 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**28.09.2016 Patentblatt 2016/39**

(51) Int Cl.:
*G01N 29/14* (2006.01)     *G01N 29/22* (2006.01)
*G01N 29/30* (2006.01)     *G01N 29/44* (2006.01)

(45) Hinweis auf die Patenterteilung:
**10.04.2013 Patentblatt 2013/15**

(21) Anmeldenummer: **07111704.8**

(22) Anmeldetag: **04.07.2007**

(54) **Verfahren zur Beurteilung von Druckbehältern aus Verbundwerkstoff mittels Schallemissionsprüfung**

Method for assessing composite pressure vessels by acoustic emission testing

Procédé destiné à l'évaluation de récipients sous pression en matière première composite à l'aide d'une vérification par émission d'ondes

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.07.2006 DE 102006033905
19.07.2006 US 807720 P**

(43) Veröffentlichungstag der Anmeldung:
**30.01.2008 Patentblatt 2008/05**

(73) Patentinhaber: **BAM Bundesanstalt für Materialforschung und -prüfung
12205 Berlin (DE)**

(72) Erfinder:
• **Bohse, Jürgen
14193, Berlin (DE)**
• **Mair, Georg W.
14979, Großbeeren (DE)**

(74) Vertreter: **Zimmermann & Partner Patentanwälte mbB
Postfach 330 920
80069 München (DE)**

(56) Entgegenhaltungen:
**WO-A-03/081228     US-A- 3 545 262
US-A- 4 577 487     US-A- 5 522 428**

EP 1 882 933 B2

**Beschreibung**

Die Erfindung betrifft (i) ein Verfahren und eine entsprechende Vorrichtung zur Beurteilung von Druckbehältern (Druckgefäße, Treibgasspeicher, sonstige Druckbehälter mit einem Innendruck von mehr als 2 bar) aus Verbundwerkstoff mittels einer Schallemissionsprüfung

Technologischer Hintergrund und Stand der Technik

Druckbehälter zur Speicherung von Gasen unter Innendruck werden herkömmlich aus Metall, zum Beispiel Stahl, gefertigt. Um eine ausreichende Sicherheit gegen Versagen bzw. für eine dauerhafte Dichtigkeit zu erzielen, sind - je nach Wahl des metallischen Werkstoffs und Auslegung der Druckbehälter - bestimmte Wanddicken einzuhalten. Ein Nachteil rein metallischer Druckbehälter ist dabei ein auf das Gewicht bezogener relativ geringer Speicherwirkungsgrad (Performance Faktor).

Eine wesentliche Gewichtsreduzierung bei zumindest vergleichbarer Funktionalität kann erreicht werden, wenn der Druckbehälter nicht allein aus Metall, sondern teilweise oder ganz aus Verbundwerkstoff gefertigt ist. Derartige Druckbehälter müssen natürlich den Grundanforderungen sicher genügen, also dicht sein und den Betriebsbelastungen (wie dem Innendruck) standhalten. Druckbehälter des sogenannten Typs III wie auch des Typs II beinhalten einen metallischen Liner der im Wesentlichen die Dichtfunktion und teilweise eine mittragende Funktion übernimmt. Zur Gewährung ausreichender mechanischer Integrität dient ein Faserverbundwerkstoff (Laminat), zum Beispiel aus Epoxidharz getränkte und gewickelte Faserstränge (Rowings) oder auch Tapes mit Thermoplastmatrix u. a., die zur Vollumwicklung beim Typ III und zur Umfangsumwicklung beim Typ II genutzt werden. Zumeist werden als Faserkomponente Kohlenstofffasern eingesetzt. Sie besitzen nur ein Viertel der Dichte von Stahl und haben etwa die dreifache statische Zugfestigkeit von normalem Stahl für nahtlose Flaschen. Die Kohlenstofffaser ist zudem nur sehr gering ermüdungsanfällig. Alternativ sind Aramidfasern, Glasfasern und zukünftig auch neue Fasern (wie z. B. Basaltfasern) oder Hybridverbunde aus mehreren Fasertypen verwendbar. Der Liner bildet bei diesen Behältertypen eine Art Grundgerüst und kann aus verschiedenen Werkstoffen gefertigt sein, wie zum Beispiel Stahl, Aluminium oder auch Thermoplast (Druckbehälter Typ IV). Der Vorteil von Druckbehältern aus Verbundwerkstoffen liegt vornehmlich in der Gewichtsreduzierung, die verglichen mit Druckbehältern aus Stahl bei gleicher Füllung bis zu 70 % betragen kann. Derartige Druckbehälter werden beispielsweise bei Rettungskräften, Feuerwehren und in medizinischen Bereichen eingesetzt. Andere Verwendungsgebiete liegen in der Luft- und Raumfahrt, im Gefahrguttransport und in der Fahrzeugtechnik als Erdgas- oder Wasserstoffspeicher.

Das Befüllen wie auch der Transport von Druckbehältern ist auf Grund ihres hohen Gefährdungspotentials mit einem generellen Verbot mit Erlaubnisvorbehalt belegt. Die Erlaubnis kann nach Erfüllung relevanter Rechtsvorschriften erteilt werden. Diese Voraussetzungen zur Zulassung beinhalten beispielsweise in Europa die Druckprobe an jedem Einzelbehälter mit Dichtigkeitsprüfung. Für die zuvor genannten Anwendungen ist keine Stichproben-Druckprüfung zulässig. Hinzu kommen verschiedene, auch zerstörende Prüfungen an Stichproben jeden Loses. WO 03/081228 A2 offenbart ein Analyseverfahren für Schallemissionsdaten, die während eines Anstiegs des Druckes im Druckbehälter erfasst werden. Dabei wird ein Behälter zyklisch mit Druck beaufschlagt und es werden nur diejenigen Messdaten zur weiteren Analyse herangezogen, die in Phasen des Drucksanstiegs liegen.

Aufgabe der vorliegenden Erfindung ist es, einen Weg aufzuzeigen, mit dem die Qualitäts-, Abnahme- oder Inspektionsprüfung von Druckbehältern aus Verbundwerkstoffen mittels Schallemissionsprüfung (SE-Prüfung) in einfacher Weise und mit hoher Zuverlässigkeit durchführbar ist. Insbesondere sollte die Schallemissionsprüfung den Bedürfnissen der industriellen Fertigung und Inspektion von Druckbehältern angepasst sein und sich mit bestehenden Fertigungs- und Inspektionsroutinen ohne großen Aufwand vereinbaren lassen. Darüber hinaus sollte sich das Verfahren zur Optimierung des Behälterdesigns sowie zur sicherheitstechnischen Beurteilung des Behälterzustands während des Betriebes im Sinne eines Health-/Safety- Monitorings oder der wiederkehrenden Druckprüfung nutzen lassen.

Zusammenfassung der Erfindung

Ein erster Aspekt der Erfindung, der zur Lösung dieser Aufgabe beiträgt, liegt in der Bereitstellung eines Verfahrens entsprechend Anspruch 1 zur Beurteilung von Druckbehältern aus Verbundwerkstoff (insbesondere Faserverbundwerkstoff (FVW)) mittels Schallemissionsprüfung.

Mittels des dargestellten Vorgehens ist es erstmalig möglich, eine SE-Prüfung zur Designoptimierung, Fertigungskontrolle oder Abnahmedruckprüfung, Inspektion sowie zur ständigen Überwachung während des Betriebs auch an Druckbehältern aus Verbundwerkstoffen durchzuführen und quantitativ zu bewerten. Das quasi-zerstörungsfreie Prüfverfahren eignet sich insbesondere zur Integration in industrielle Entwicklungs- und Fertigungsprozesse sowie für den Einsatz bei wiederkehrenden Prüfungen (Inspektionen) oder dem Health-/SafetyMonitoring (z. B. bei Befüllvorgängen) der Druckbehälter. Das Verfahren beinhaltet unabhängig von der Anwendung immer die identischen Schritte zur Festlegung der Beurteilungs kriterien auf Basis der Merkmalskriterien nach den Schritten (a) bis (d) und den Vergleich der Einzelmessergebnisse gemäß dem Schritt (e) am zu beurteilenden Druckbehälter mit den Grenzwerten der Merkmalskriterien aus Schritt (d).

Die SE-Prüfung ist an sich seit vielen Jahren bekannt und wird in nennenswertem Umfang zur Prüfung rein metallischer Druckbehälter eingesetzt. Zur Absicherung von Gasdruckprüfungen angewendet erspart sie gegenüber einer konventionellen Wasserdruckprüfung eine kostenintensive und beschädigungsträchtige Demontage der Druckbehälter sowie die Trocknung der Druckbehälter nach der Wasserdruckprüfung. Darüber hinaus ist das Ergebnis der SE-Prüfung gegenüber der reinen Wasserdruckprüfung weitaus aussagekräftiger bezüglich des aktuellen Druckbehälterzustands.

Gebräuchliche Konstruktionswerkstoffe zeigen zunächst ein elastisches Verhalten. Mit steigender Last und Dehnung, die auf den Werkstoff ausgeübt werden, erhöht sich die im Werkstoff gespeicherte elastische Energie. Mit Überschreiten der Elastizitätsgrenze kommt es je nach Zähigkeit des Materials zur plastischen Verformung (Metalle) oder zum Sprödbruch (FVWe). Befindet sich in dem elastisch gedehnten Material ein Defekt, dann konzentrieren sich dort Spannungen und es können Risse entstehen, die das Material lokal ruckartig entspannen. Der resultierende kurzzeitige Bewegungsstoß führt zur Entstehung einer elastischen Welle (Schallemissionsereignis), die sich im Bauteil ausbreitet und mit geeigneten Schallemissionssensoren (SE-Sensoren) detektiert werden kann. Die SE-Prüfung erkennt und interpretiert die akustischen Ereignisse aus solchen Rissvorgängen und kann sehr früh eine beginnende Makroschädigung in dem zu prüfenden Objekt erkennen, anzeigen und gegebenenfalls orten (siehe auch US 3,545,262 und US 4,577,487).

Bei der konventionellen SE-Prüfung metallischer Druckbehälter wird ein Schallemissionsereignis durch lokal freigesetzte elastische Energie und die dabei entstehenden Spannungswellen erfasst. Mit einer relativ kleinen Zahl von SE-Sensoren an festen Positionen kann ein Druckbehälter geprüft bzw. überwacht werden. Die Schallemissionsprüfung ermöglicht eine Detektion von Defekten quasi im Moment des Entstehens der Schallemission, ist also echtzeitfähig und kann daher zur frühzeitigen Gefahrenanzeige zum Beispiel auch bei einer konventionellen Druckprüfung eingesetzt werden.

Es hat sich nun gezeigt, dass eine Übertragung derfür metallische Druckbehälter bereits etablierten Prozeduren der SE-Prüfung auf Druckbehälter aus Verbundwerkstoffen nicht ohne weiteres möglich ist. Ein wesentlicher Unterschied besteht darin, dass die Natur der Schallemissionsereignisse bei Verbundwerkstoffen auf Grund des Einsatzes von Fasermaterialen und Kunststoffen von denen bei rein metallischen Druckbehältern stark abweicht. Das abweichende Mikroschädigungsverhalten von Verbundwerkstoffen ermöglicht meist keine Analyse und Bewertung der Amplituden/ Energien von Einzelereignissen (Bursts), wie es bei der konventionellen SE-Prüfung an vollmetallischen Druckbehältern die Praxis ist. Dies liegt im Wesentlichen an der hohen Schallemissionsrate, die bei Druckbehältern aus Verbundwerkstoffen festzustellen ist. Der erfindungsgemäße Ansatz liegt nun darin, die meist gemessene "kontinuierliche" Schallemission, die sich in vorbestimmten Phasen mit zeitgesteuerter Druckbeaufschlagung (und/oder Entlastung) einstellt, zu bewerten, und zwar anhand von Merkmalskriterien. Hierbei werden die Werte jedes Merkmalskriteriums mit den quantifizierten Grenzwerten der Beurteilungs kriterien, die für den SE-Verlauf fehlerfrei klassifizierter Druckbehälter als Grenzwerte kennzeichnend sind, einzeln oder in Kombination verglichen. Mit anderen Worten, weicht der während der SE-Prüfung eines Druckbehälters aufgezeichnete individuelle SE-Verlauf von der SE-Mutterkurve ab (die Merkmalskriterien können samt der dazugehörigen Grenzwerte in einer SE-Mutterkurve zusammengefasst werden), d.h. sind die anhand der SE-Mutterkurve für die Merkmalskriterien gesetzten Toleranzen überschritten, so ist das Beurteilungs kriterium erfüllt und es ist zu vermuten, dass der Druckbehälter nicht qualitätsgerecht gefertigt wurde oder beschädigt ist. Werden gleich mehrere Beurteilung skriterien erfüllt, so ist mit zunehmender Wahrscheinlichkeit von einem fehlerbehafteten und damit auszusondernden Druckbehälter auszugehen.

Unter fehlerfrei klassifizierten Druckbehältern werden im Sinne von Referenzbehältern mittels konventioneller Qualitätskontrollen als defektfrei beurteilte Druckbehälter verstanden. Derartige konventionelle Qualitätsprüfungsverfahren umfassen beispielsweise die Wasserdruckprüfung mit und ohne Volumenausdehnungsmessung, Matrixanalysen und Wickelprotokolle. Im Idealfall werden die Eigenschaften der Referenzbehälter zu Kontrollzwecken im Nachgang zur SE-Prüfung im Sinne der Baumusterprüfung zerstörend geprüft.

Eine bevorzugte Variante des Verfahrens sieht vor, dass der Druckbehälter einen metallischen Liner aufweist (sogenannter Typ II und Typ 111-Behälter) und der SE-Prüfvorgang aus Schritt (a) und auch (e) im Fertigungsprozess des Druckbehälters zeitgleich mit einer Autofrettage erfolgt. Die Autofrettage ist ein Verfahren zur Erhöhung der Ermüdungsfestigkeit von Druckbehältern mit einem metallischen Liner, bei dem durch das einmalige Aufbringen eines weit über dem Betriebsdruck liegenden Reckdruckes gezielt Druckeigenspannungen im metallischen Liner eingebracht werden, so dass die Mittelspannung im Liner infolge dynamischer Betriebsbelastung in Richtung des Druckspannungsbereiches (von der Schwellzur Wechselbelastung) verschoben und somit die Bildung von Liner-Anrissen verzögert wird. Alternativ oder ergänzend kann der SE-Prüfvorgang aus Schritt (a) und auch (e) im Fertigungsprozess des Druckbehälters zeitgleich mit einer Enddruckprüfung (Produktabnahmeprüfung bzw. Prüfung vor Inbetriebnahme) erfolgen. Diese Verfahrensvariante bietet sich insbesondere für Vollcomposite-Behälter mit nichtmetallischem Liner an.

Der SE-Prüfvorgang aus Schritt (e) kann ebenfalls zur Optimierung eines Druckbehälterdesigns oder eines Fertigungsverfahrens zeitgleich mit Druckprüfungen (an Prototyp-Behältern) im Entwicklungsprozess erfolgen, wenn ein Basisdesign nach den Schritten (a) bis (c) vermessen und beschrieben ist. Neue Ergebnisse aus Schritt (e) lassen sich auch als neue Basiswerte nach den Schritten (a) in Verbindung mit (b) interpretieren. Hierbei tritt an die Stelle der quantitativen Vorgabe von Unter- und Obergrenzen für die Beurteilungskriterien für jedes Merkmalskriterium das Optimierungskriterium der minimalen Energiesumme in jedem Druckintervall (z. B. ist das weiter unten noch näher spezifizierte Merkmalskriterium (1) zu maximieren, während die anderen dort genannten Kriterien zu minimieren sind).

Nach einer weiteren Verfahrensvariante kann der SE-Prüfvorgang aus Schritt (a) und damit auch (e) während einer Inspektionskontrolle des Druckbehälters (wiederkehrende Prüfung; erneutes In-Verkehr-Bringen) zeitgleich mit einer Druckprüfung durchgeführt werden.

Schließlich kann der SE-Prüfvorgang aus Schritt (e) während des Betriebs (z. B. beim Befüllvorgang) von Druckbehältern mit hohem Gefährdungspotenzial als Verfahren zur sicherheitstechnischen Überwachung (Health-/Safety- Monitoring) eingesetzt werden. Die entsprechenden Merkmalskriterien nach den Schritten (a) bis (c) und die Aussonderungskriterien im Sinne von Schritt (d) müssen während der erstmaligen Prüfung erfasst werden oder es müssen andere Kriterien bezüglich des Niveaus oder des progressiven Anstiegs der Merkmalskriterien im Vorfeld festgelegt werden.

Ein wesentlicher Schritt für alle Varianten und Anwendungsfälle ist, dass die Referenzgruppe und die zu beurteilenden Druckbehälter jedes Mal technisch vergleichbar im Sinne des Schrittes (a) bzw. (e) geprüft werden und die Merkmalskriterien aus den Prüfergebnissen der zu beurteilenden Druckbehälter mit den quantitativen Grenzwerten aus dem Schritt (d) verglichen werden.

Im Schritt (b) werden ein oder mehrere Merkmalskriterien vorgegeben, die den folgenden Bedingungen genügen:

(1) ein Innendruck $P_0$, definiert als Schnittpunkt mit der Druckachse aus dem linearen Kurvenfitting oberhalb P*;

(2) eine kumulierte Energie $E_{AE,P*}$ bis zu einem Innendruck P*, wobei P* das Druckniveau darstellt, oberhalb dessen ein nahezu linearer Anstieg der kumulierten Energie vs Druck zu verzeichnen ist;

(3) eine Steigung der kumulierten Energie in einem bestimmten normierten Druckintervall ($E_{A\tilde{E}}$ P) wechselnden, insbesondere steigenden Druckes, wobei sich der Startpunkt des Druckintervalls aus P* ergibt und der Endpunkt des Druckintervalls aus dem Ende der linearen Energiezunahme während des Prüfvorgangs resultiert;

(4) eine kumulierte Energie ($E_{EA,Pr}$) bis zum Beginn einer Druckhaltephase des Prüfvorgangs;

(5) eine kumulierte Energie ($E_{EA,Ph}$) während der Druckhaltephase des Prüfvorgangs; und

Die Absolutwerte der genannten Merkmalskriterien sind abhängig von der verwendeten SE-Messtechnik (Sensortyp und Frequenzfilterung), den Einstellungen der SE-Messparameter, der Geschwindigkeit der Druckbeaufschlagung bzw. Druckabsenkung sowie der Temperatur des Druckbehälters. Sie haben sich insbesondere im Autofrettage-Prozess bei Druckbehältern des Typs III bewährt, sind aber universell auch für die anderen Anwendungen zielführend.

Ein zweiter Aspekt der Erfindung, der zur Lösung dieser Aufgabe beiträgt, liegt in der Verwendung eines Datenträgers gemäß Anspruch 9. Ein solcher Datenträger kann beispielsweise als CD-ROM oder Festplatte ausgeführt sein.

Ein dritter Aspekt der Erfindung, der zur Lösung dieser Aufgabe beiträgt, liegt in der Bereitstellung eines SE-Prüfsystems für die Prüfung von Druckbehältern aus Verbundwerkstoff gemäß Anspruch 7.

Die Erfindung wird nachfolgend in Ausführungsbeispielen anhand der zugehörigen Zeichnungen näher erläutert. Es zeigen:

Figur 1 eine Prinzipdarstellung zur Illustration eines SE-Prüfsystems;

Figur 2 eine für den Autofrettage-Prozess bestimmte SE-Mutterkurve; und

Figur 3 Prüfergebnisse an Druckbehältern mit verschiedenen Fertigungsfehlern.

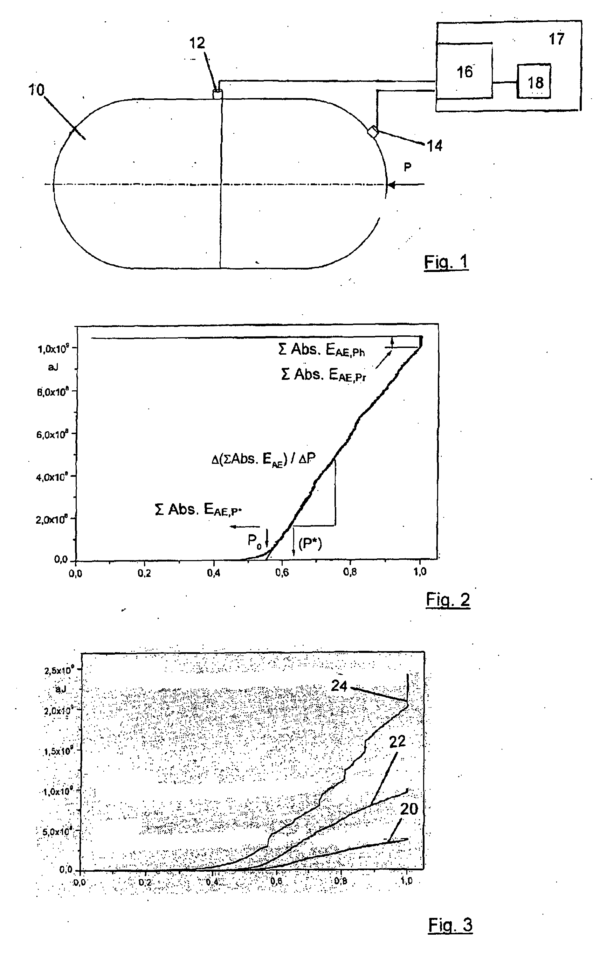

Figur 1 ist eine Prinzipdarstellung zur Illustration eines erfindungsgemäßen SE-Prüfsystems. Auf einem Druckbehälter 10 aus Verbundstoff werden zwei SE-Sensoren 12, 14 positioniert, ein erster SE-Sensor 12 mittig im zylindrischen Bereich und ein zweiter SE-Sensor 14 am Boden des Druckbehälters 10. Je nach Bauart und Geometrie des Druckbehälters 10 können auch weitere SE-Sensoren auf dem Druckbehälter 10 angeordnet werden. Die SE-Sensoren 12,14 sind ausgangsseitig über Signalleitungen mit einer Signalaufzeichnungs- und Signalauswerteeinheit 16 eines SE-Prüfsystems 17 verbunden, welche wiederum eingangsseitig mit einem Speichermittel 18 verbunden ist, derart, dass die in dem Speichermittel 18 hinterlegten Daten eingelesen werden können. Während des Prüfvorgangs wird der Druckbehälter 10 mit einem Druck P von innen beaufschlagt, insbesondere durch Einleitung eines Prüfgases.

Eine Ankopplung der SE-Sensoren 12, 14 erfolgt durch ein geeignetes akustisches Koppelmittel und eine mechanische Halterung. Bei Einsatz in der Serienfertigung bzw. Serienprüfung von Druckbehältern 10 können die SE-Sensoren 12, 14 automatisch mechanisch über einen Manipulator mit einem Federbügel für konstante Anpresskräfte und schnelle Benetzung mit Koppelmittel angekoppelt werden. Die SE-Sensoren 12, 14 erzeugen die Schallemissionssignale während der Druckbelastung und leiten die Signale - gegebenenfalls über einen internen oder externen Vorverstärker- an die Signalaufzeichnungs- und -auswerteeinheit 16 weiter. Aus dem übertragenen Signal werden Merkmale extrahiert, welche die Intensität der Signale (z. B. Energie, Counts, Amplitude) sowie der Ankunftszeit der Hits darstellen. In dem Fall, dass eine "kontinuierliche" Schallemission auftritt und eine Hit-bezogene Signalanalyse nicht möglich ist, wird die SE-Signalenergie zeitbezogen analysiert. Gleichzeitig wird vom SE-Prüfsystem 17 der Innendruck P und die Temperatur des Druckbehälters 10 als externe Parameter gemessen. Die erfassten Daten werden als Schallemissionsdatensatz zusammengefasst. Es folgt eine Analyse der SE-Signalenergie als Funktion des Prüfdrucks in der Auswerteeinheit 16.

Ein Druckbehälter 10 mit einem metallischen Liner, zum Beispiel aus Aluminium, und einem äußeren Laminat, zum Beispiel aus in Epoxidharz gebetteten gewickelten Kohlenstofffasern, wird im Fertigungsprozess üblicherweise einer Autofrettage unterzogen. Hierbei wird ein über dem Betriebsdruck liegender Reckdruck eingebracht. Während dieses Fertigungsschrittes kann gleichzeitig die erfindungsgemäße Qualitätskontrolle stattfinden. Vorzugsweise wird dabei die Phase des Autofrettage-Prozesses zur Qualitätskontrolle genutzt, die mittels Druckanstiegsrate, Maximaldruck und Druckhaltezeit definiert ist. Zur Qualitätskontrolle ist es nun notwendig Auswahlkriterien für den Autofrettage-Prozess vorzugeben.

Dazu werden zunächst eine statistisch hinreichende Anzahl von SE-Verläufen fehlerfrei klassifizierter Druckbehälter gleicher Bauart mit der oben skizzierten Messanordnung aufgezeichnet. Die Erfassung erfolgt in vorbestimmten Phasen der Druckbeaufschlagung der Druckbehälter; konkret wird im vorliegendem Beispiel eine Phase des Druckanstiegs im Autofrettage-Prozess und ein bestimmtes Zeitintervall des Druckhaltens während des Autofrettage-Prozesses erfasst. Es hat sich vorliegend gezeigt, dass für die im Folgenden noch näher beschriebenen zehn Auswahlkriterien (fünf pro SE-Kanal) bereits die Vermessung von 7 bis 13 Druckbehältern als Referenz statistisch zufrieden stellende Ergebnisse liefert. Die Anzahl der Druckbehälter ist prinzipiell so zu wählen, dass das Auswahlkriterium Konvergenzneigung aufweist und die Ergebnisse bezügliche Mittelwert und Standardabweichungen als statistisch abgesichert gelten können. Für jeden SE-Kanal werden die SE-Verläufe getrennt aufgezeichnet.

Durch statistische Auswertung der jeweils einem SE-Kanal zugeordneten SE-Verläufe werden normierte und gemittelte Kurven des Schallemissionsverlaufs erhalten, deren Standardabweichungen den jeweiligen Toleranzgrenzen entsprechen können. Figur 2 zeigt eine solche SE-Mutterkurve aus dem Autofrettage-Prozess für den SE-Kanal 12 (eine entsprechende SE-Mutterkurve ist auch für den zweiten SE-Kanal 14 erstellbar).

Im nächsten Schritt sind die Werte der Merkmalskriterien für die Parametrisierung des SE-Verlaufes fehlerfrei klassifizierter Druckbehälter zu ermitteln (jeweils auf die SE-Mutterkurve eines SE-Kanals bezogen). Der Figur 2 sind fünf derartige Merkmalskriterien zu entnehmen.

Durch lineare Kurvenanpassung der SE-Mutterkurve an die Funktion y=A+B*x im interessierenden Druckbe-reich mit y = $\Sigma$ Abs. $E_{AE}$ (y-Achse: detektierte kumulierte Schallemissionsenergie am ersten SE-Kanal 12) und x = P (x-Achse: absoluter Autofrettage-Druck - im Beispiel aus Gründen der Vertraulichkeit normiert dargestellt) lassen sich die Merkmalskriterien beschreiben als:

$$(1) \qquad P_o = -A\ /\ B$$

$$(2) \qquad E_{AE,P^*} = \Sigma\ \text{Abs. } E_{AE}\ \text{bei } P^*$$

$$(3) \qquad (\Sigma\ \text{Abs. } E_{AE})\ /\quad P$$

$$(4) \qquad \Sigma\ \text{Abs. } E_{AE,Pr}\ \text{(bis zum Beginn der Druckhaltephase des Autofrettage-Prozesses)}$$

$$(5) \qquad \Sigma\ \text{Abs. } E_{AE,Ph}\ \text{(während der Druckhaltephase im Autofrettage-Prozess)}.$$

An Stelle der sogenannten "absoluten" Energie (Abs. $E_{AE}$) können auch andere Verfahren zur Berechnung der SE-Signalenergie verwendet werden. Die vorgenannten Merkmalskriterien stehen fest. Die kritischen Werte der einzelnen Merkmalskriterien oder aus deren Kombination, die zu einem oder mehreren Beurteilungs kriterien zusammengeführt werden, hängen von Bautyp und Geometrie des Druckbehälters, der Lage der SE-Sensoren oder auch von den während der Prüfung herrschenden Bedingungen ab. Die einzelnen Beurteil ungskriterien im Sinne von oberen und unteren Grenzwerten lassen sich im konkreten Einzelfall anhand von Druckbehältern mit verschiedenen relevanten Referenzfehlern auf ein Maximum von Treffsicherheit bei einem Minimum von Aussonderungsfehlern festlegen. Art und Ausmaß der Referenzfehler sind so zu wählen, dass häufige Fehler in der Fertigung (z. B. bei Matrixmischung, Matrixaushärtegrad, Faseranteil, Wanddicke oder Lagenaufbau) abgedeckt sind. Der Fachmann wird sich bei der Bestimmung der Beurteil ungskriterien am Ausführungsbeispiel orientieren können und entsprechende Abweichungen vom Baumusterdes Druckbehälters, in der Lage der SE-Sensoren und den während des Prüfvorgangs herrschenden Bedingungen mit wenigen Versuchen verifizieren können.

Tabelle 1 gibt für die Beurteil ungskriterien exemplarisch obere und untere Schwellenwerte (Toleranzgrenzen, Grenzwerte) an, die sich über die angegebenen Mittelwerte und Standardabweichungen unter Berücksichtigung einer gesetzten Defektwahrscheinlichkeit festsetzen lassen. Position A bezieht sich dabei auf den ersten SE-Sensor zum Kanal 12 aus Figur 1 und Position B auf den zweiten SE-Sensor zum Kanal 14 aus Figur 1 (die EinheitaJ entspricht $10^{-18}$J).

Tabelle 1

| Merkmalkriterium | | Einheit | Mittelwert | Standardabweichung | Unterer Schwellenwert | Oberer Schwellenwert | Wahrscheinlichkeit |
|---|---|---|---|---|---|---|---|
| A | 1 | bar | 267 | 8,8 | 2,53E+02 | 2,81 E+02 | 5,000 % |
| | 2 | aJ | 2,67E+ 08 | 1,32E+08 | 4,99E+07 | 4,85E+08 | 5,000 % |
| | 3 | aJ/bar | 9,18E+ 06 | 1,91 E+06 | 6,73E+06 | 1,16E+07 | 10,000 % |
| | 4 | aJ | 1,66E+ 09 | 4,31 E+08 | 6,56E+08 | 2,66E+09 | 1,000% |
| | 5 | aJ | 6,86E+ 07 | 2,07E+07 | 2,05E+07 | 1,17E+08 | 1,000% |
| | | | | | | | |
| B | 1 | bar | 270 | 8,4 | 2,50E+02 | 2,90E+02 | 1,000% |
| | 2 | aJ | 1,53E+ 08 | 5,34E+07 | 6,53E+07 | 2,41 E+08 | 5,000 % |
| | 3 | aJ/bar | 5,77E+ 06 | 7,01 E+05 | 4,62E+06 | 6,92E+06 | 5,000 % |
| | 4 | aJ | 9,82E+ 08 | 1,27E+08 | 6,87E+08 | 1,28E+09 | 1,000% |
| | 5 | aJ | 1,16E+ 08 | 3,17E+07 | 6,43E+07 | 1,69E+08 | 5,000 % |

Die in der Tabelle angegebenen Schwellenwerte sind im Sinne eines Toleranzbereiches für jedes Merkmalskriterium der SE-Sensorpositionen zu den Kanälen 12, 14 getrennt festzustellen. Dabei kann vorzugsweise zunächst eine Betrachtung der zulässigen Ausfallrate (Wahrscheinlichkeit), die als irrtümliche Aussonderung toleriert werden kann, und der Zuverlässigkeit, die zur Detektierung relevanter Fehler gefordert ist, erfolgen. Anschließend sind pro SE-Sensor für jedes Merkmalskriterium spezifische Toleranzbereiche (unterer und oberer Schwellenwert), die auf Basis einer für dieses Merkmalskriterium relevanten Verteilung (z. B. Normenverteilung, Weibull-Verteilung) bestimmbar sind, im Sinne eines Beurteilungskriteriums festzulegen.

Optional können einzelne Aussonderungskriterien verknüpft werden. Beispielsweise hat es sich vorliegend als vorteilhaft erwiesen, wenn eine Anzeige der Aussonderung nur dann erfolgt, wenn mindestens 2 der 10 Merkmalskriterien der beiden SE-Sensoren zu den Kanälen 12, 14 außerhalb der Toleranzbereiche liegen. Gegebenenfalls ist eine erneute Anpassung der Toleranzwerte bei Festlegung derartiger Verknüpfungen erforderlich.

Im Idealfall sind die Funktionalität der Optimierung der Beurteilungskriterien nach Maßgabe der konkurrierenden Randbedingungen Treffsicherheit und irrtümliche Aussonderung in der verwendeten Technik (Datenträger 18) hinterlegt bzw. programmiert.

Nach Erstellung der SE-Mutterkurve beziehungsweise Festlegung der Beurteilungskriterien nebst Toleranzen werden diese in dem geeigneten Datenträger 18 hinterlegt (Fig. 1). Die Auswerteeinheit 16 greift auf die hinterlegten Auswahlkriterien zurück und vergleicht diese mit dem Verlauf der erfassten Schallemission des Prüflings. Es erfolgt eine Bewertung der Fertigungsqualität des zu prüfenden Druckbehälters eben durch Vergleich des individuellen SE-Verlaufs mit den zulässigen Toleranzen (unterer und oberer Schwellenwert des Toleranzbereiches) einzelner oder verknüpfter Aussonderungskriterien in Bezug auf die SE-Mutterkurve.

Figur 3 sind Beispiele für Prüfergebnisse von Druckbehältern zu entnehmen, die im Verlauf eines Autofrettage-Prozesses aufgezeichnet wurden. Kurve 20 entspricht dem SE-Verlauf eines fehlerfrei klassifizierten Druckbehälters. Die Kurven 22 und 24 zeigen die individuellen SE-Verläufe von zwei Druckbehältern mit unterschiedlichen Fertigungsfehlern. Aus den SE-Verläufen der Kurven 22, 24 kann durch Vergleich mit den SE-Verläufen von Druckbehältern mit Referenzfehlern in Verbindung mit der Lage des herangezogenen SE-Sensors auch eine Aussage über die Natur des Defekts getroffen werden. Gegebenenfalls können die gewonnenen Erkenntnisse für eine Optimierung des Druckbehälterdesigns und des Fertigungsverfahrens genutzt werden.

Das zuvor beschriebene, konkret auf den Autofrettage-Prozess abgestimmte Vorgehen lässt sich in analoger Weise auf die Enddruckprüfung von Druckbehältern aus Verbundwerkstoffen am Ende des Fertigungsprozesses übertragen. Bei der Festlegung der Beurteilungskriterien sowie der Auslegung des SE-Prüfsystems kann sich der Fachmann dabei an dem vorab beschriebenen Ausführungsbeispiel orientieren.

Ebenso lässt sich eine derartige Defektanalyse auch im Zuge der Inspektion von Druckbehältern aus Verbundwerkstoff durchführen, zum Beispiel begleitend mit einer derzeit obligatorisch vorgeschriebenen wiederkehrenden Druckprüfung.

Die Anwendung einer derartigen Defektanalyse auf das Health-/Safety- Monitoring von Druckbehältern aus Verbundwerkstoff unter Verwendung von temporär während des Prüfvorgangs am Behälter angesetzten SE-Sensoren oder von dauerhaft installierten Sensoren, zum Beispiel einlaminierte bzw. aufgeklebte folien-oder faserförmige sensitive SE-Elemente/- Sensoren, ist ebenfalls möglich.

**Patentansprüche**

1. Verfahren zur Beurteilung von Druckbehältern (10) aus Verbundwerkstoff mittels Schallemissionsprüfung, umfassend die Schritte:

   (a) Erfassen des Innendrucks und einer Anzahl von innendruckabhängigen Schallemissionsverläufen (SE-Verläufe) fehlerfrei klassifizierter Druckbehälter (10) identischer Fertigung in vorbestimmten Phasen einer zeitkontrollierten Druckbeaufschlagung des Druckbehälters (10) (SE-Prüfvorgang) mit einem oder mehreren Schallemissionskanälen (SE-Kanäle) mit Schallemissionssensoren (12, 14; SE-Sensoren) vorgegebener Lage;

   (b) Festlegen von ein oder mehreren Merkmalskriterien anhand der erfassten SE-Verläufe, nämlich der detektierten kumulierten Schallemissionsenergie $E_{AE}$ vs. Absoluter Druck P, aus Schritt (a) und Quantifizierung des einen Merkmalskriteriums oder der mehreren Merkmalskriterien aller SE-Verläufe aus Schritt (a), wobei das eine Merkmalskriterium oder die mehreren Merkmalskriterien sich beschreiben lassen als:

   (1) ein Innendruck $P_0$, definiert als Schnittpunkt des linearen Kurvenfittings des SE-Verlaufs oberhalb P* mit der Druckachse, wobei P* das Druckniveau darstellt, oberhalb dessen ein nahezu linearer Anstieg der kumulierten Energie vs. Druck zu verzeichnen ist;
   (2) eine kumulierte Energie $E_{AE,P*}$ bis zu einem Innendruck P*, wobei P* das Druckniveau darstellt, oberhalb dessen ein nahezu linearer Anstieg der kumulierten Energie vs. Druck zu verzeichnen ist;

(3) eine Steigung der kumulierten Energie in einem bestimmten normierten Druckintervall ($\Delta E_{AE}/\Delta P$) wechselnden, insbesondere steigenden Druckes, wobei sich der Startpunkt des Druckintervalls aus P\* ergibt und der Endpunkt des Druckintervalls aus dem Ende der linearen Energiezunahme während des Prüfvorgangs resultiert;

(4) eine kumulierte Energie ($E_{EA,Pr}$) bis zum Beginn einer Druckhaltephase des Prüfvorgangs;

(5) eine kumulierte Energie ($E_{EA,Ph}$) während der Druckhaltephase des Prüfvorgangs; und

(c) statistische Auswertung der quantifizierten Merkmalskriterien aller SE-Verläufe aus Schritt (b) nach Merkmalskriterien getrennt;

(d) quantitative Bestimmung von Beurteilungskriterien für jedes Merkmalskriterium oder jede gewünschte Kombination von Merkmalskriterien durch Festlegen von Grenzwerten für die Merkmalskriterien aus Schritt (c);

(e) quantitative Erfassung der Messwerte zu jedem Merkmalskriterium jedes SE-Kanals in Analogie zu den Schritten (a) und (b) für jeden der zu beurteilenden Druckbehälter (10); und

(f) Vergleich der Messwerte aus Schritt (e) mit den quantifizierten Grenzwerten der Beurteilungskriterien aus Schritt (d).

2. Verfahren nach Anspruch 1, bei dem der Druckbehälter einen metallischen Liner aufweist und der SE-Prüfvorgang aus Schritt (a) bzw. (e) im Fertigungsprozess des Druckbehälters (10) zeitgleich mit einer Autofrettage erfolgt.

3. Verfahren nach Anspruch 1, bei dem der SE-Prüfvorgang aus Schritt (a) bzw. (e) im Fertigungsprozess des Druckbehälters (10) zeitgleich mit einer Produktabnahmeprüfung bzw. Prüfung vor Inbetriebnahme, insbesondere von Vollcomposite-Behältern, erfolgt.

4. Verfahren nach Anspruch 1, bei dem der SE-Prüfvorgang aus Schritt (a) bzw. (e) während einer wiederkehrenden Prüfung / Inspektion zeitgleich mit einer Druckprüfung erfolgt.

5. Verfahren nach Anspruch 1, bei dem der SE-Prüfvorgang aus Schritt (a) bzw. (e) zur Optimierung eines Druckbehälterdesigns und/oder eines Fertigungsverfahrens zeitgleich mit einer Druckprüfung im Entwicklungsprozess erfolgt.

6. Verfahren nach Anspruch 1, bei dem der SE-Prüfvorgang aus Schritt (a) bzw. (e) zur sicherheitstechnischen Überwachung von Druckbehältern (10) mit hohem Gefährdungspotenzial während des Betriebs erfolgt.

7. Schallemissionsprüfsystem (17) für Druckbehälter (10) aus Verbundwerkstoff, umfassend:

(i) einen oder mehrere SE-Kanäle, bestehend aus SE-Sensor (12, 14) vorgegebener Lage, Signalverstärker und Signalaufzeichnungseinheit zur Erfassung der Schallemission, sowie Parameterkanale zur Erfassung des Innendrucks und der Temperatur des Druckbehälters (10) während eines SE-Prüfvorgangs; und

(ii) eine Auswerteeinheit (16), die mit den SE-Kanälen verbunden ist und weiterhin programmtechnisch eingerichtet ist, das Verfahren gemäß einem der vorhergehenden Ansprüche durchzuführen.

8. Schallemissionsprüfsystem (17) gemäß Anspruch 7, wobei die Auswerteeinheit (16) eingangsseitig mit einem Datenträger verbunden ist, auf dem ein oder mehrere Merkmal-, Beurteilungskriterien, die nach den Schritten (a) - (d) eines Verfahrens gemäß Anspruch 1 bestimmt wurden, gespeichert sind, und auf die zur Durchführung des Verfahrens gemäß einem der Ansprüche 1 bis 6 zugegriffen wird.

9. Verwendung eines Datenträgers mit einem Schallemissionsprüfsystem gemäß Anspruch 8 in einem Verfahren gemäß einem der Ansprüche 1 bis 6, wobei auf dem Datenträger Merkmal- oder Beurteilungskriterien gespeichert sind, die nach den Schritten (a) - (d) eines Verfahrens gemäß Anspruch 1 bestimmt wurden.

**Claims**

1. A method for assessing pressure vessels (10) of composite material by means of acoustic emission testing, comprising the steps:

(a) determining the internal pressure and a number of internal pressure-dependent acoustic emission characteristics (AE characteristics) of pressure vessels (10) of identical manufacture that have been classified as being without defects, in predetermined phases of a time-controlled application of pressure on the pressure vessel (10) (AE test procedure) with one or more acoustic emission channels (AE channels) with acoustic emission sensors (12, 14; AE sensors) of a predetermined position;

(b) defining of one or more feature criteria with the aid of the determined AE characteristics, namely the detected cumulative acoustic emission energy $E_{AE}$ vs. absolute pressure P, from step (a) and quantifying of the one feature criterion or of the several feature criteria of all AE characteristics from step (a), wherein the one feature criterion or the several feature criteria can be described as:

(1) an internal pressure $P_0$, defined as the point of intersection of the linear curve fitting of the AE characteristic above P* with the pressure axis, wherein P* represents the pressure level above which an almost linear increase of the cumulative energy vs. pressure is to be noted;

(2) a cumulative energy $E_{AE,P*}$ up to an internal pressure P*, wherein P* represents the pressure level above which an almost linear increase of the cumulative energy vs. pressure is to be noted,

(3) an increase of the cumulative energy in a particular standardized pressure interval ($\Delta E_{AE}/\Delta P$) of varying, in particular increasing pressure, wherein the starting point of the pressure interval is derived from P* and the end point of the pressure interval results from the end of the linear energy increase during the test procedure;

(4) a cumulative energy ($E_{EA,Pr}$) up to the start of a pressure holding phase of the test procedure;

(5) a cumulative energy ($E_{EA,Ph}$) during the pressure holding phase of the test procedure; and

(c) statistical analysis of the quantified feature criteria of all AE characteristics from step (b), separated accord to feature criteria;

(d) quantitative determination of assessment criteria for each feature criterion or each desired combination of feature criteria by defining threshold values for the feature criteria from step (c);

(e) quantitative determination of the measured values for each feature criterion of each AE channel by analogy with steps (a) and (b) for each of the pressure vessels (10) which are to be assessed; and

(f) comparison of the measured values from step (e) with the quantified threshold values of the assessment criteria from step (d).

2. The method according to Claim 1, in which the pressure vessel has a metal liner and the AE test procedure of step (a) or respectively (e) takes place in the manufacturing process of the pressure vessel (10) simultaneously with an autofrettage.

3. The method according to Claim 1, in which the AE test procedure of step (a) or respectively (e) takes place in the manufacturing process of the pressure vessel (10) simultaneously with a product acceptance testing or respectively testing before initial operation, in particular of all-composite vessels.

4. The method according to Claim 1, in which the AE test procedure of step (a) or respectively (e) takes place during a recurring test / inspection simultaneously with a pressure test.

5. The method according to Claim 1, in which the AE test procedure of step (a) or respectively (e) takes place for optimizing of a pressure vessel design and/or of a manufacturing method simultaneously with a pressure test in the development process.

6. The method according to Claim 1, in which the AE test procedure of step (a) or respectively (e) takes place for the safety-related monitoring of pressure vessels (10) with a high hazard potential during operation.

7. An acoustic emission test system (17) for pressure vessels (10) of composite material, comprising:

(i) one or more AE channels, consisting of AE Sensor (12, 14) of a predetermined position, signal amplifiers and signal recording unit for detecting the acoustic emission, and parameter channels for detecting the internal pressure and the temperature of the pressure vessel (10) during an AE test procedure; and

(ii) an evaluation unit (16) which is connected with the AE channels and in addition is arranged by implementation of programs to carry out the method according to one of the preceding claims.

8. The acoustic emission test system (17) according to Claim 7, wherein
the evaluation unit (16) is connected on the input side with a data carrier on which one or more feature-, assessment criteria are stored which were determined according to steps (a) - (d) of a method according to Claim 1, and which is accessed for carrying out the method according to one of Claims 1 to 6.

9. The use of a data carrier with an acoustic emission test system according to Claim 8 in a method according to one of Claims 1 to 6, wherein feature- or assessment criteria are stored on the data carrier, which were determined according to steps (a) - (d) of a method according to Claim 1.


**Revendications**

1. Procédé pour évaluer des conteneurs sous pression (10) en matériau composite au moyen d'un contrôle par émissions acoustiques, comprenant les étapes de :

(a) saisie de la pression intérieure et d'un nombre de profils d'émissions acoustiques (profils d'EA) dépendants de la pression intérieure de conteneurs sous pression (10) classifiés sans défaut de fabrication identique dans des phases prédéfinies d'une application de pression chronométrée du conteneur sous pression (10) (Procédé de contrôle des EA) avec un ou plusieurs canaux d'émissions acoustiques (canaux d'EA) avec des capteurs d'émissions acoustiques (12, 14 ; capteurs d'EA) d'une situation spécifiée ;
(b) détermination d'un ou plusieurs critères caractéristiques à l'aide de profils d'EA saisis, notamment de l'énergie d'émissions acoustiques $E_{EA}$ détectée cumulée par rapport à une pression absolue P à partir de l'étape (a) et quantification d'un critère caractéristique quelconque ou de plusieurs critères caractéristiques de tous les profils d'EA à partir de l'étape (a), un critère caractéristique quelconque ou plusieurs critères caractéristiques pouvant être décrits en tant que :

(1) une pression intérieure $P_0$, définie en tant que point d'intersection des adaptations de courbe linéaire du profil d'EA au-dessus de P* avec l'axe de pression, P* représentant le niveau de pression, au-dessus duquel on enregistre une augmentation presque linéaire de l'énergie cumulée par rapport à la pression ;
(2) une énergie cumulée $E_{EA,P*}$ jusqu'à une pression intérieure P*, P* représentant le niveau de pression, au-dessus duquel on enregistre une augmentation presque linéaire de l'énergie cumulée par rapport à la pression ;
(3) une hausse de l'énergie cumulée dans un certain intervalle de pression ($\Delta E_{EA}/\Delta P$) normalisé d'une pression variable, en particulier croissante, le point initial de l'intervalle de pression résultant de P* et le point final de l'intervalle de pression résultant de la fin de l'accroissement d'énergie linéaire pendant le processus de contrôle ;
(4) une énergie cumulée ($E_{EA,Pr}$) jusqu'au début d'une phase de maintien de pression du processus de contrôle ;
(5) une énergie cumulée ($E_{EA,Ph}$) pendant la phase de maintien de pression du processus de contrôle ; et

(c) exploitation statistique des critères caractéristiques quantifiés de tous les profils d'EA à partir de l'étape (b) séparés selon les critères caractéristiques ;
(d) définition quantitative des critères d'évaluation pour chaque critère caractéristique ou chaque combinaison souhaitée de critères caractéristiques par détermination des valeurs limites pour les critères caractéristiques à partir de l'étape (c) ;
(e) saisie quantitative des valeurs de mesure pour chaque critère caractéristique de chaque canal d'EA par analogie aux étapes (a) et (b) pour chacun des conteneurs sous pression à évaluer (10) ; et
(f) comparaison des valeurs de mesure à partir de l'étape (e) avec les valeurs limites quantifiées des critères d'évaluation à partir de l'étape (d).

2. Procédé selon la revendication 1 pour lequel le conteneur sous pression présente un revêtement métallique et le processus de contrôle par EA à partir de l'étape (a) ou (e) a lieu dans le processus de fabrication du conteneur sous pression (10) simultanément à un autofrettage.

3. Procédé selon la revendication 1 pour lequel le processus de contrôle par EA à partir de l'étape (a) ou (e) dans le processus de fabrication du conteneur sous pression (10) a lieu simultanément à un contrôle de réception du produit ou contrôle avant mise en service, en particulier de conteneurs entièrement en composite.

4. Procédé selon la revendication 1 pour lequel le processus de contrôle par EA à partir de l'étape (a) ou (e) a lieu pendant un contrôle / une inspection récurrent simultanément à un contrôle de la pression.

**5.** Procédé selon la revendication 1 pour lequel le processus de contrôle par EA à partir de l'étape (a) ou (e) pour optimiser une conception de conteneur sous pression et/ou d'un procédé de fabrication a lieu simultanément à un contrôle de pression dans le processus de mise au point.

**6.** Procédé selon la revendication 1 pour lequel le processus de contrôle par EA à partir de l'étape (a) ou (e) pour la surveillance technique de sécurité des conteneurs sous pression (10) avec un potentiel de risque élevé a lieu pendant le fonctionnement.

**7.** Système de contrôle par émissions acoustiques (17) pour conteneurs sous pression (10) en matériau composite, comprenant :

(i) un ou plusieurs canaux d'EA, composé de capteur d'EA (12, 14) d'une situation prédéfinie, d'un amplificateur de signaux et d'une unité d'enregistrement de signaux pour saisir les émissions acoustiques, ainsi que des canaux de paramètres pour saisir la pression intérieure et la température du conteneur sous pression (10) pendant un processus de contrôle par EA ; et
(ii) une unité d'évaluation (16) qui est reliée aux canaux d'EA et est de plus installée selon une technique de programme pour exécuter le procédé selon une quelconque des revendications précédentes.

**8.** Système de contrôle par émissions acoustiques (17) selon la revendication 7, l'unité d'exploitation (16) étant reliée à un support de données du côté entrée sur lequel sont mémorisés un ou plusieurs critères dévaluation caractéristiques qui ont été déterminés selon les étapes (a)-(d) d'un procédé selon la revendication 1 et auxquels on a accès en exécutant le procédé selon une quelconque des revendications 1 à 6.

**9.** Utilisation d'un support de données avec un système de contrôle par émissions acoustiques selon la revendication 8 dans un procédé selon une quelconque des revendications 1 à 6, des critères caractéristiques ou d'évaluation étant mémorisés sur le support de données, qui ont été déterminés selon les étapes (a) - (d) d'un procédé selon la revendication 1.

Fig. 1

Fig. 2

Fig. 3

**EP 1 882 933 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03081228 A2
- US 3545262 A
- US 4577487 A